## Europäisches Patentamt
## European Patent Office
## Office européen des brevets

(19)

(11) Publication number: **0 033 244**
A2

(12) **EUROPEAN PATENT APPLICATION**

(21) Application number: **81300327.4**

(22) Date of filing: **23.01.81**

(51) Int. Cl.³: **B 29 D 3/02**
**B 32 B 17/04**

(30) Priority: **23.01.80 GB 8002255**
**15.02.80 GB 8005224**

(43) Date of publication of application:
**05.08.81 Bulletin 81/31**

(84) Designated Contracting States:
**DE FR GB IT NL SE**

(71) Applicant: **Smith, Henry Roy**
**Thornley**
**Knightwick Worcester WR6 5PU(GB)**

(72) Inventor: **Smith, Henry Roy**
**Thornley**
**Knightwick Worcester WR6 5PU(GB)**

(74) Representative: **Connor, Terence Kevin et al,**
**Fitzpatricks Kern House 61/62 Lincoln's Inn Fields**
**London WC2B 6EX(GB)**

(54) **Fibre reinforced materials and methods of making and using them.**

(57) Specification describes material for use in forming fibre reinforced structures comprising longitudinally extending fibre reinforcing material having a thermoplastics resin intimately associated therewith along the length thereof. The thermo-plastics resin may be formed as a coating along the length of the fibre and/or as part of a composite fibre. The coating may be applied to the fibre by passing the fibre through an extrusion press or bath of molten thermo-plastics material. The material so formed may be used to form fabric by weaving, knitting or the like or may be used directly subsequent to being chopped into short lengths. Various structures for use in the aircraft industry, and the methods of making those structures from the material are described.

FIG. 1.

EP 0 033 244 A2

The invention concerns fibre reinforced materials and methods of making and of using them.

Conventionally fibre reinforced material structures are made by placing a mass of fibres, for example, glass, keular carbon, quartz or metal fibres, in a mould and impregnating them with a thermo-setting resin. As the resin cures the fibre reinforced material structure of the design shape is formed.

One problem encountered with this method is that most thermo-setting resins require that a catalyst or accelerator be mixed with it to ensure that the resin cures in a reasonable time and it requires accurate and skilled knowledge to mix the correct amount of accelerator with the resin to provide a structure having the desired characteristics. For example when making thick structures the exothermic nature of the resin curing reaction may cause the structure to distort. It is possible to reduce the rate at which heat is generated by reducing the amount of catalyst mixed with the resin but this extends the curing time, sometimes to uneconomic lengths. One suggestion made to overcome this problem when making relatively thick structures has been to build up the structure from several separate layers, allowing each layer to substantially set before placing the next layer on top of it. A problem found with structures made this way is that the bonding between the different layers may not be sufficiently good and stress in the structure may cause the different layers to separate.

When making relatively thin structures from fibre reinforced materials a skilled operator is needed to lay up the material correctly to ensure that the structure wall thickness is consistent. One suggestion for overcoming this difficulty is to use a two part mould for forming the structure, however even with a two part mould there is a requirement for reasonably accurate control of the mass thickness prior to moulding if the density of the structure is to be consistent. In certain applications, particularly in the aircraft industry, it is essential that the density and thickness of the structure, for example a radome, does not vary substantially so that the electrical characteristics of the structure are known.

Another problem found with known fibre reinforced material structures is that once the shape has been formed it cannot be altered. If the shape for some reason is incorrect (for example due to distortion of the structure in the mould) the only way of correcting the situation is to physically cut or file the structure.

Suggestions have been made that in place of the thermo-setting resins used generally for fibre reinforced material structures thermo-plastics materials be used.

Due to the relatively high viscosity of most thermo-plastics resins it is impractical to impregnate the resins directly into the mass of fibre reinforcing material and the suggestions made to-date comprise dissolving the thermo-plastics resin in a solvent and applying the solution to the mass of reinforced fibres. It is then necessary to dry the material so that the solvent is dispersed and the impregnated mass of fibre material is then introduced to a mould for the application of heat and pressure thereto. Major problems found in trying to operate in this way are associated with the solvents used which are generally toxic, and may be flammable if not explosive.

Objects of the invention are to provide methods of making fibre reinforced material structures with the use of thermo-plastics materials which overcome or alleviate the noted difficulties of manufacturing with thermo-setting resins and which avoids the disadvantage of the proposals so far made for using thermo-plastics materials.

An aspect of the present invention provides material for use in forming fibre reinforced structures comprising longitudinally extending fibre reinforcing material having a thermo-plastic resin . intimately associated therewith along the length thereof.

It is to be understood that the term fibre used throughout this specification refers both to large diameter mono-filament fibres and to bundles of filaments commonly referred to as "fibres" or "tows".

It will be seen that in accordance with the invention the production of fibre reinforced materials may be enhanced in so far as the thermo-plastic material associated with the fibres fills the interstices therebetween in a matt, woven or knitted fabric.

The fibres tend to touch one another and therefor set together when the thermo-plastics resin hardens.

Other aspects of the invention provide methods of making the noted materials and structures made therefrom.

Embodiments of the invention will now be described with reference to the accompanying drawings in which :-

Figure 1 diagrammatically illustrates one method of forming a material in accordance with the invention,

Figure 2 diagrammatically illustrates a second method of forming a material in accordance with the invention,

Figure 3 illustrates two examples of fibre reinforced material embodying the present invention, and

Figures 4, 5 and 6 show ways in which material embodying the present invention may be used to make a fibre reinforced material structure of complex shape.

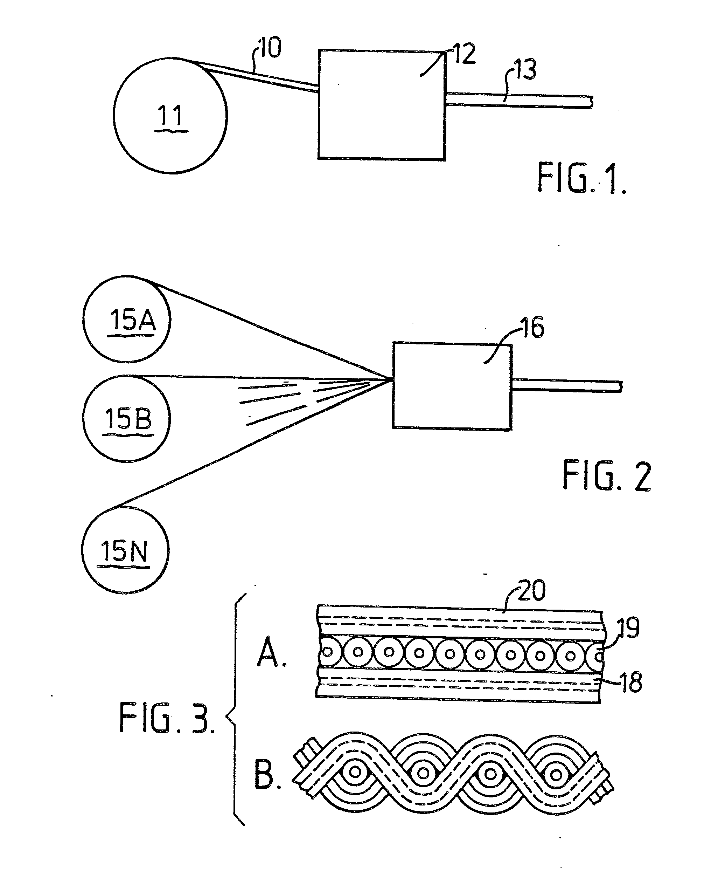

Figure 1 shows an arrangement in which a fibre (for example a large diameter mono-filament glass fibre, or a tow of smaller diameter glass mono-filaments) 10 is taken from a spool 11 to a device 12 in which it is coated with a thermo-plastic material such as polyethersulphone, polysulphone, a polyamide, polyetheretherketone, nylon or the like.

The device 12 may comprise any suitable device for coating the fibre with the thermo-plastic material, for example an extrusion press arranged to give the fibre a coating 13 of thermo-plastic material as the fibre leaves the device or a bath of molten thermo-plastic material through which the fibre is drawn.

It will be noted that the thermo-plastics material is applied directly to the fibre without the use of a solvent and that in practice the rate of fibre feed through the device may be adjusted to vary the thickness of the coating of thermo-plastic material applied to the fibre and therefore control the fibre volume fraction, Vf, of the ultimate material which is formed.

Figure 2 shows a second method of forming fibres embodying the invention in which a plurality of spools 15A, 15B,......15N, are provided. Some of the spools carry large diameter mono-filaments or bundles of small diameter filaments of reinforcing fibre for example glass, carbon, quartz etc., whilst other carry large diameter mono-filaments or bundles of small diameter filaments of thermo-plastics materials such as those already mentioned with respect to Figure 1. Fibres are taken from each spool to device 16 in which they are aligned with one another and heated slightly to a temperature at which the thermo-plastics material softens sufficiently to cause the separate bundles of fibres being fed to the device 16 to adhere to one another and therefore form a coherent fibre tow.

One preferred ratio of fibre reinforcing material to thermo-plastics material would be provided if there were ten spools 15 six of which carried reinforcing materials (which may be the same or different) and four of which carried thermo-plastics materials (which again may be the same or different).

With advantage the composite fibre issuing from the device 16 in the arrangement of Figure 2 may be processed in accordance with the arrangement of Figure 1 to provide it with an outer coating of thermo-plastics material.

Once formed the length of thermo-plastics material, coated fibres may be used in many different ways either directly or after further processing.

Figures 3A and 3B illustrate two ways in which a cloth of thermo-plastics material coated reinforcing material may be formed.

Figure 3A illustrates a cloth formed by arranging a first array 18 of stretched lengths of thermo-plastics reinforced materials produced in accordance with the method of Figure 1 side by side. A second array 19 of similar stretched fibres is then positioned on top of the first array 18, the fibres of the second array lying in a direction orthogonal to the direction in which the fibres of the first array 18 extend. A third array 20 similar to the array 18 may then be positioned on top of the array 19 with its fibres (in the example shown) lying generally parallel to the fibres of the array 18.

When the fibres forming the three arrays are heated and pressed together the thermo-plastics material melts and on cooling resolidifies to provide a layer of material of the desired thickness. It will be appreciated that by increasing or decreasing the number of arrays of stretched fibres that are used, and that by varying the direction of the fibres different directional strength characteristics may be obtained in the final article.

It is possible to apply a low level of heat to the stacked set of arrays of Fig. 3A and a low, local pressure thereto to provide a "stock" fabric material ready for use in subsequent moulding processes; having the advantages already described.

It will be further appreciated that after the melting and subsequent resolidification of the thermo-plastics material the reinforcing fibres in the various arrays used lie in a continuous matrix of thermo-plastics material.

Figure 3B indicates the way in which a woven structure may be formed.

It will be appreciated that it is possible to use felting or knitting methods for forming fibre reinforced material layers embodying the present invention.

Whatever form of layer is prepared it will be seen that the use of fibre reinforcing materials coated with thermo-plastics materials in accordance with the present invention is advantageous as it provides firstly that the interstices of the fibres are completely filled with the thermo-plastics materials after processing, secondly that it is possible to vary the thickness of the coating and therefore vary the number of fibres per unit volume of the finished article, thirdly that once the thermo-plastic material has cooled and set the layer is ready for use without the need for further processing for example by driving off a, possibly toxic or flamable, solvent, and fourthly that layers formed in accordance with the present invention may be used to form structures of complex shape.

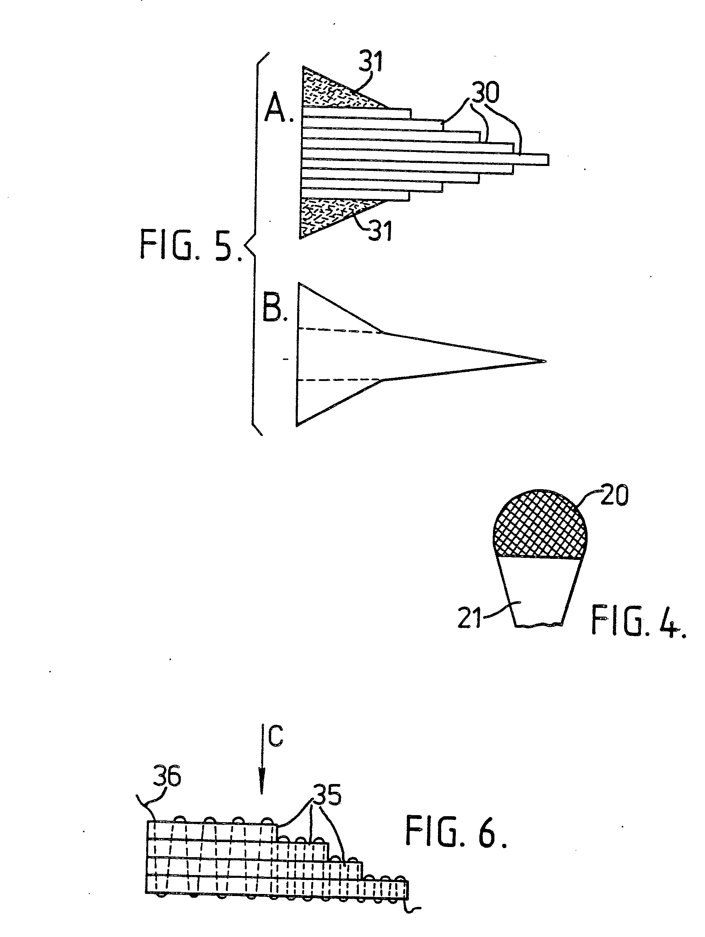

For example Figure 4 shows a way in which a layer 20 of material for example formed in accordance with the arrangement of Figure 3, may be heated and then draped over former 21 of a vacuum moulding machine. Air is then extracted from former 21 and the layer of material allowed to cool. Once the layer has cooled and the thermo-plastics material resolidified it will be seen that a structure of a desired shape, in this case a radome, has been formed. It will be appreciated that if no substantial variation in the density or thickness of the walls of the finished product is required a sheet of lenticular form may be used.

Figure 5A shows the way in which a structure having another complex shape, in this case a antenna casing, may be formed.

A plurality of layers 30 each for example formed as shown at Figure 3A positioned one on another as shown. The root area of the antenna, 31, have additional, triangular in section, volumes filled with short lengths of chopped thermo-plastics material coated reinforcing fibres therein. Upon the application of heat and pressure the structure adopts the shape shown in Figure 5B.

It will be appreciated that the root portion of the antenna, which is normally subject to the greater stress, has been formed by a volume of thermo-plastics fibre reinforced material including short lengths of randomly arrayed fibres. Until now it has been usual to form these root portions by building up the root portions making use of several different layers of material which, as the root areas are subjected to the greatest stress, have been prone to inter-laminar failure wherein the separate layers tend to come apart due to insufficient bonding therebetween. The danger of inter-laminar failure in this root portion is very substantially reduced in accordance with the present arrangement in which a random array of reinforcing fibres is provided in the root areas.

Figure 6 shows the way in which the danger of inter-laminar failure in other material structures may be overcome for example when it is desired to make a particularly thick structure. In accordance with the arrangement of Figure 6 a plurality of layers of fabric 35, each for example formed according to Fig. 3A or 3B are stacked one upon another. The various layers of fabric are then joined together, in the direction of arrow C, by stitching through the various layers of fabric with lengths of thermo-plastics coated fibre 36. The whole pile of material may then be formed into the desired shape by heating, pressing and subsequently allowing the matrix to cool. The inclusion in this structure of the stitching fibres 36 substantially increases the strength of the structure and reduces the possibility of inter-laminar failure consequent upon stressing of the structure by a force acting in the direction of the arrow C, has in the past, caused problems of separation of the various layers 35.

It will be appreciated that the above forms a description of only a few of the advantages of using a thermo-plastics coated fibre reinforcing material formed in accordance with the arrangements of Fig. 1 or Fig. 1 and Fig. 2, to form fibre reinforced material structures.

Experience has shown that an unexpected advantage of using thermo-plastics coated fibre reinforced materials to form moulded structures for use externally for aircraft is that damage to such structures for example by rain droplets, is significantly less than with structures formed of known thermo-setting resin reinforced fibre materials. It is thought probable the reason for the lessening in damage due to rain erosion is due to the fact that most thermo-plastics material form a more flexible matrix after cooling than the majority of thermo-setting resins.

It will be further appreciated that the above described arrangements provide that a continuous matrix of thermo-plastics material is formed including fibre reinforcing materials much more readily than would be the case were the high viscosity thermo-plastics resins discussed herein used directly to impregnate a mass of fibrous reinforcing material. In particular the use of the arrangement of Fig. 2 ensures that thermo-plastics material extends fully into composite fibre tows. Due to the
nature of the material formed in accordance with the
arrangements of Figures 1 and 2 it will be seen that the
danger of producing a

finished structure including voids (for example where the thermo-plastic material has not properly impregnated into the mass of fibrous reinforcing material) has been very substantially reduced.

Finally it will be appreciated the uses to which thermo-plastics coated materials may be put and many and various examples have been given of the manufacture antenna and radomes used in aircraft however with modern thermo-plastics materials having a high melting point it is possible that substantially more parts of an airframe structure may be manufactured by using fibre reinforced materials embodying the present invention. For example certain thermo-plastics materials described above e.g. polyethersulphone and polyetheretherketone have been found to have glass transition temperatures, $T_g$, in excess of $200^{o}C$ which would enable substantial parts of an airframe structure to be manufactured therefrom with safety.

CLAIMS :

1.      Material for use in forming fibre reinforced structures comprising longitudinally extending fibre reinforcing material having a thermo-plastics resin intimately associated    therewith along the length thereof.

2.      Material as claimed in Claim 1, in which the longitudinally extending fibre reinforcing material has a coating of thermo-plastics material formed on the outer surface thereof.

3.      Material as claimed in Claim 1 or Claim 2, in which the longitudinally extending fibre reinforcing material comprises a tow of fibre reinforcing filaments.

4.      Material as claimed in Claim 1 or Claim 2, in which the longitudinally extending fibre reinforcing material is a tow comprising both fibre reinforcing filaments and filaments of thermo-plastics resin.

5.      A method of making a material for use in forming fibre reinforced structures comprising extruding onto the outer surface of a longitudinally extending fibre reinforcing material a coating of a thermo-plastics resin.

6.      A method of producing material for use in forming fibre reinforced structures comprising passing a longitudinally extending fibre reinforcing material through a bath of molten thermo-plastics resin material.

7.      A method according to Claim 5 or Claim 6, in which the longitudinally extending fibre reinforcing material comprises a tow of filaments of reinforcing material.

8.      A method according to Claim 5 or Claim 6, in which the longitudinally extending fibre reinforcing material is a tow comprising both      reinforcing filaments and filaments of thermo-plastics material formed by joining bundles of fibre reinforcing filaments and bundles of filaments of thermos-plastics material together

0033244

-13-

in a heated environment.

9. A method of manufacturing a fibre reinforced structure comprising manufacturing a material in accordance with any one of Claims 5, 6, 7 and 8, chopping the material into short lengths, depositing the chopped material into a mould for moulding by applying heat and pressure thereto.

10. A method of forming a fibre reinforced structure comprising manufacturing material in accordance with any one of Claims 5, 6, 7 and 8, weaving the material so formed to form a fabric, laying the fabric in a mould for moulding by applying heat and pressure thereto.

11. A method of manufacturing a fibre reinforced structure comprising manufacturing material in accordance with any one of Claims 5, 6, 7 and 8, laying one or more first tensioned arrays of lengths of the material in parallel planes with said lengths extending in a first direction, laying one or more second tensioned arrays of lengths of the material in planes parallel to said planes of said first arrays with the lengths thereof extending in a second direction orthogonal to said first direction, each said first array contacting a said second array, and heating and pressing the arrays together.

12. A method of forming a fibre reinforced structure comprising manufacturing material in accordance with any one of Claims 5, 6, 7 and 8, forming layers of fabric by weaving or stacking arrays of lengths of said material, stacking a plurality of layers of said fabric one upon another, stitching the said layers of fabric together with lengths of the material extending through the stacked layers of material in a direction generally normal to the planes of those layers, and applying heat and pressure to the mass so formed.

0033244

FIG.1.

FIG. 2

FIG. 3.

A.

B.

**FIG. 5.**

A.

31

30

31

B.

20

21

**FIG. 4.**

C

36

35

**FIG. 6.**